# EUROPÄISCHE PATENTSCHRIFT

(11) **EP 2 847 843 B1**
(45) Veröffentlichungstag und Bekanntmachung des Hinweises auf die Patenterteilung: **28.03.2018**
(21) Anmeldenummer: 13718853.8
(22) Anmeldetag: 29.04.2013
(51) Int. Cl.: H02J 3/38, H02M 7/5387

(54) **PHOTOVOLTAIKANLAGE UND VERFAHREN ZUM BETREIBEN EINER PHOTOVOLTAIKANLAGE ZUR EINSPEISUNG VON ELEKTRISCHER LEISTUNG IN EIN MITTELSPANNUNGSNETZ**
PHOTOVOLTAIC SYSTEM AND METHOD FOR OPERATING A PHOTOVOLTAIC SYSTEM FOR FEEDING ELECTRICAL POWER INTO A MEDIUM-VOLTAGE NETWORK
INSTALLATION PHOTOVOLTAÏQUE ET PROCÉDÉ DE FONCTIONNEMENT D'UNE INSTALLATION PHOTOVOLTAÏQUE POUR L'ALIMENTATION EN PUISSANCE ÉLECTRIQUE D'UN RÉSEAU ÉLECTRIQUE MOYENNE TENSION

(30) Priorität: 07.05.2012 DE 102012104005
(43) Veröffentlichungstag der Anmeldung: 18.03.2015
(73) Patentinhaber: SMA Solar Technology AG, 34266 Niestetal (DE); Adensis GmbH, 01129 Dresden (DE)
(72) Erfinder: FALK, Andreas, 34131 Kassel (DE); BECK, Bernhard, 97332 Volkbach-Dimbach (DE); GERDEMANN, Aaron, Philipp, 34119 Kassel (DE); NIEBLING, Frank, 34260 Kaufungen (DE)
(74) Vertreter: Lahnor, Peter
(86) Internationale Anmeldenummer: PCT/EP2013/058864
(87) Internationale Veröffentlichungsnummer: WO 2013/167407

(56) Entgegenhaltungen:
- EP-A1- 2 190 110
- DE-A1- 3 236 071
- DE-U1-202009 018 199
- US-A- 4 481 378
- Anonymous: "PV-Netzintegration", SMA Homepage , 1. April 2012 (2012-04-01), Seiten 1-36, XP002713041, Gefunden im Internet: URL:http://files.sma.de/dl/10040/PV-Netzin t-ADE123016w.pdf [gefunden am 2013-09-09]

## Beschreibung

Die Erfindung betrifft ein Verfahren zum Betreiben einer Photovoltaikanlage mit einem Photovoltaikgenerator mit einer Mehrzahl von Photovoltaikmodulen, mindestens einem Wechselrichter und mindestens einem Mittelspannungstransformator zur Einspeisung von elektrischer Leistung in ein Mittelspannungsnetz. Die Erfindung betrifft weiterhin eine zur Durchführung des Verfahrens eingerichtete Photovoltaikanlage.

Bei größeren Photovoltaikanlagen, insbesondere Freilandanlagen, ist üblicherweise eine Einspeisung der erzeugten elektrischen Leistung direkt in ein Mittelspannungsnetz, z. B. ein 20 Kilovolt (kV)-Netz, vorgesehen. Solche Freilandanlagen weisen in der Regel eine Vielzahl von Photovoltaikmodulen auf, von denen jeweils mehrere zu sogenannten Strings serienverschaltet sind. Häufig wird eine Mehrzahl der Strings zusammengeschaltet, um die von ihnen erzeugte Leistung in Form von Gleichstrom einem von gegebenenfalls mehreren vorhandenen Wechselrichtern zuzuführen. Ausgansseitig sind die vorhandenen Wechselrichter mit einem Primärkreis eines Mittelspannungstransformators verbunden. Dabei kann für jeden Wechselrichter ein Mittelspannungstransformator vorgesehen sein oder es können mehrere Wechselrichter mit einem Mittelspannungstransformator, ggf. mit separaten Primärwicklungen, verbunden sein. Über den oder die sekundärseitigen Ausgänge des Transformators wird die erzeugte Leistung, gegebenenfalls über ein Koppelschütz, in das Mittelspannungsnetz eingespeist.

Aus dem Artikel "Enel's 3-MW Power Station Preliminary Design", 10th European Photovoltaik Solar Energy Conference von C. Corvi et al. ist eine Photovoltaikanlage dieser Art bekannt, bei der die Wechselrichter unmittelbar mit den Mittelspannungstransformatoren verbunden sind. Dabei werden Wechselrichter mit Wechselrichterbrücken eingesetzt, die mit Thyristoren bestückt sind. Die Wechselrichter sind netzkommutiert, beziehen also die Schaltspannung, auch Kommutierungsspannung für die Thyristoren aus dem Stromversorgungsnetz.

Aufgrund ihres relativ niedrigen Wirkungsgrades werden heutzutage Wechselrichter mit Thyristor-bestückten Wechselrichterbrücken nur noch selten eingesetzt. Üblicher ist die Verwendung von Schalttransistoren in den Wechselrichterbrücken, um den Wechselrichter pulsweitenmoduliert betreiben zu können. Als Transistoren kommen dabei meist IGBTs (Insulating Gate Bipolar Transistors) oder MOSFETS (Metal Oxid Semiconductor Field Effect Transistors) zum Einsatz. Zum Schutz vor hohen Spannungen in Sperrrichtung sind diese Transistoren üblicherweise mit einer in Sperrrichtung des Transistors leitenden, antiparallelen Diode geschützt, die häufig bereits im Transistor integriert ist. Diese auch als Freilaufdioden bezeichneten Dioden bilden einen Vollwellengleichrichter von dem Netzanschluss zum Gleichspannungszwischenkreis des Wechselrichters. Wenn am Wechselrichter netzseitig Wechselspannung anliegt, aber keine ausreichende Spannung von den Photovoltaikmodulen bereitgestellt wird, setzt über die Freilaufdioden ein Stromrückfluss durch die Photovoltaikmodule unter Leistungsentnahme aus dem Wechselspannungsnetz ein.

Um solche durch die Bauart des Wechselrichters bedingte Rückströme zu verhindern ist es bekannt, die Wechselrichter jeweils über ein Wechselstrom-Niederspannungsschütz mit den Mittelspannungstransformatoren zu verbinden.

Die Wechselstrom-Niederspannungsschütze werden eingesetzt, um den Wechselrichters bei fehlender oder ungenügender Sonneneinstrahlung vom Netz zu trennen und so einen Stromrückfluss durch die Photovoltaikmodule unter Leistungsentnahme aus dem Netz zu verhindern. Darüber hinaus können die Wechselstrom-Niederspannungsschütze benutzt werden, um den jeweiligen Wechselrichter im Überstrom- oder Kurzschlussfall, bei Verletzung der geforderten Netzparameter (Spannung, Frequenz, eingespeiste Blindleistung usw.) oder beim Ausfall eines Wechselrichters selektiv vom Mittelspannungstransformator abzukoppeln. Die Ausstattung eines jeden Wechselrichters mit einem zugeordneten Wechselstrom-Niederspannungsschütz und einer Überwachungseinrichtung für die Einhaltung der Netzeinspeiseparameter ist jedoch aufwändig und kostenintensiv.

Weiterhin ist es bekannt, ein Wechselstrom-Trennorgan zwischen einem Mittelspannungstransformator und dem Energieversorgungsnetz anzuordnen, das als wechselstromseitiges Schutzorgan dient. Beispielsweise beschreibt der Artikel "Electrical Fault Protection for a Large Photovoltaic Power Plant Inverter", D.E. Collier und T.S. Key, Photovoltaics Specialists Conference, IEEE Conference Record, 1988, eine derartige Photovoltaikanlage, wobei bei einem Vorliegen verschiedener Fehlerfälle das Wechselstrom-Trennorgan betätigt wird, nachdem ein Gleichstrom-Schaltorgan den Wechselrichter von Photovoltaikmodulen getrennt hat.

Der Artikel "Advanced, High-Reliability, System-Integrated 500-kW PV Inverter Development", R. West, Final Subcontract Report NREL/SR-520-43839, 2008, beschreibt ebenfalls eine Photovoltaikanlage, bei der ein Gleichstrom-Schaltorgan zwischen Photovoltaikmodulen und einem Wechselrichter angeordnet ist und ein Wechselstrom-Trennorgan zwischen einem Mittelspannungstransformator und dem Energieversorgungsnetz vorgesehen ist. Bei einem Abschaltvorgang des Wechselrichters, beispielsweise bei zu geringer Einstrahlungsintensität, erfolgt ein Öffnen sowohl des Gleichstrom-Schaltorgans als auch des Wechselstrom-Trennorgans.

Es ist daher eine Aufgabe der vorliegenden Erfindung, ein Verfahren zum Betreiben einer Photovoltaikanlage der eingangs genannten Art zur Einspeisung von elektrischer Leistung in ein Mittelspannungsnetz und eine entsprechende Photovoltaikanlage zu schaffen, bei denen eine Trennung der Photovoltaikmodule vom Netz und ein Rückstromschutz auf eine weniger aufwändige Weise erreicht wird.

Diese Aufgabe wird durch ein Verfahren und eine Photovoltaikanlage mit den jeweiligen Merkmalen der unabhängigen Ansprüche gelöst. Weitere Ausgestaltungen und vorteilhafte Weiterbildungen des Verfahrens und der Photovoltaikanlage sind in den jeweiligen abhängigen Ansprüchen angegeben.

Bei dem Verfahren zum Betreiben einer Photovoltaikanlage zur Einspeisung in ein Mittelspannungsnetz weist die Photovoltaikanlage einen Photovoltaikgenerator mit einer Mehrzahl von Photovoltaikmodulen, mindestens einen Wechselrichter und mindestens einen Mittelspannungstransformator auf. Dabei ist der Mittelspannungstransformator primärseitig unmittelbar mit einem Wechselstrom-Niederspannungsausgang des Wechselrichters verbunden, und der Wechselrichter ist über einen Gleichstromeingang mit dem Photovoltaikgenerator verbunden, wobei der Wechselrichter bauartbedingt Rückströme von dem Wechselstrom-Niederspannungsausgang zu dem Gleichstromeingang zulässt. Das Verfahren zeichnet sich dadurch aus, dass bei nicht zur Einspeisung ausreichender Erzeugung von elektrischer Leistung durch die Photovoltaikmodule der Photovoltaikanlage der Wechselrichter wechselstromseitig über den Mittelspannungstransformator mit dem Mittelspannungsnetz verbunden bleibt und der Wechselrichter gleichstromseitig mit dem Photovoltaikgenerator verbunden bleibt.

Durch die unmittelbare Anbindung des Mittelspannungstransformators an den Wechselrichter entfällt das kostenintensive primärseitige Wechselstrom-Niederspannungsschütz zwischen dem Wechselrichter und dem Mittelspannungstransformator. Dadurch, dass der Wechselrichter gleichstromseitig mit dem Photovoltaikgenerator verbunden bleibt, kann auf ein Gleichspannungs-Schaltorgan zwischen dem Photovoltaikgenerator und dem Wechselrichter verzichtet werden oder Schaltorgan verwendet werden, das nicht für eine hohe Anzahl von Schaltzyklen ausgelegt sein muss. Das erfindungsgemäße Verfahren beruht auf der Erkenntnis, dass eine wechsel- und Gleichstromseitige Trennung entgegen der üblichen Praxis unterbleiben kann, da eine Durchlassspannung der üblicherweise reihenverschalteten Mehrzahl an Photovoltaikmodulen bei heutigen Photovoltaikanlagen größer ist, als eine sich am Gleichstromeingang aufgrund der Rückströme einstellende Spannung.

In einer bevorzugten Ausgestaltung des Verfahrens wird die Photovoltaikanlage auf der Sekundärseite des Mittelspannungstransformators mit Hilfe eines zwischen dem Mittelspannungstransformator und dem Mittelspannungsnetz angeordneten Koppelschützes von dem Mittelspannungsnetz getrennt, wenn vorgegebene Netzparameter nicht erfüllt werden.

Insbesondere bei größeren Anlagen mit mehreren Wechselrichtern ergibt sich dadurch ein Vorteil, da bei jedem Wechselrichter ein Wechselstrom-Niederspannungsschütz eingespart werden kann, aber nur ein gemeinsames Koppelschütz für alle Wechselrichter benötigt wird.

Eine erfindungsgemäße Photovoltaikanlage weist eine Photovoltaikgenerator mit einer Mehrzahl von Photovoltaikmodulen, mindestens einem Wechselrichter und mindestens einem Mittelspannungstransformator auf. Dabei ist der Mittelspannungstransformator primärseitig unmittelbar mit einem Wechselstrom-Niederspannungsausgang des Wechselrichters verbunden und Wechselrichter über einen Gleichstromeingang mit dem Photovoltaikgenerator. Der Wechselrichter lässt bauartbedingt Rückströme von dem Wechselstrom-Niederspannungsausgang zu dem Gleichstromeingang zu. Die Photovoltaikanlage zeichnet sich dadurch aus, dass innerhalb des Photovoltaikgenerators eine derart große Anzahl von Photovoltaikmodule reihenverschaltet ist, dass eine Durchlassspannung der reihenverschalteten Photovoltaikmodule größer ist, als eine sich am Gleichstromeingang aufgrund der Rückströme einstellende Spannung und dass die Photovoltaikanlage zur Durchführung des zuvor genannten Verfahrens eingerichtet ist. Die sich ergebenden Vorteile entsprechen denen des Verfahrens.

Im Folgenden wird die Erfindung anhand eines Ausführungsbeispiels mit Hilfe von drei Figuren näher erläutert. Die Figuren zeigen:
Fig. 1 eine Photovoltaikanlage zum Anschluss an ein Mittelspannungsnetz;
Fig. 2 ein Flussdiagramm eines Ausführungsbeispiels eines Verfahrens zum Betreiben einer Photovoltaikanlage und
Fig. 3 ein Flussdiagramm eines weiteren Ausführungsbeispiels eines Verfahrens zum Betreiben einer Photovoltaikanlage.

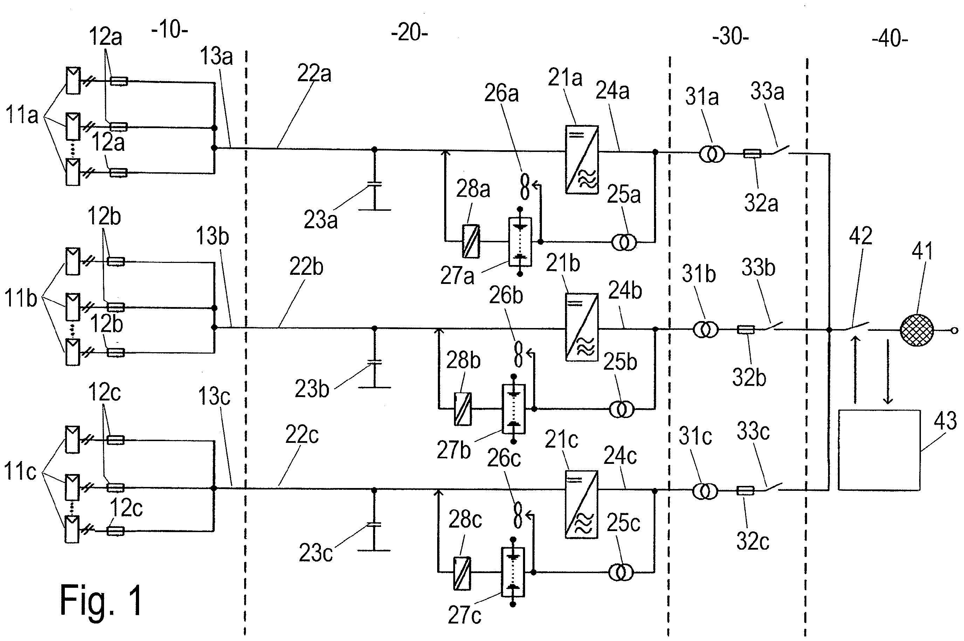

Die in der Figur 1 dargestellte Photovoltaikanlage ist schematisch in vier Bereiche gegliedert: einen Photovoltaikgenerator 10, eine Wechselrichteranordnung 20, Mittelspannungskomponenten 30 und einen Bereich zur Netzanbindung 40.

Der Bereich zur Netzanbindung 40 ist einfach in der Photovoltaikanlage enthalten. Die übrigen Bereiche 10, 20, 30 weisen jeweils mehrere, in Figur 1 beispielhaft drei, unabhängige Zweige auf, die jeweils gleich aufgebaut sind. In der Figur 1 sind die Komponenten der einzelnen Zweige a, b, c durch einen an das jeweilige Bezugszeichen der Komponenten angehängten Zusatz a, b oder c voneinander unterschieden. Wenn im Folgenden ein Bezugszeichen ohne einen solchen Zusatz verwendet wird, bezieht es sich entweder auf alle entsprechenden Komponenten gemeinsam oder auf eine nicht näher spezifizierte Komponente, wobei die Zuordnung zu einem der Zweige unerheblich ist. Die Anzahl von drei Zweigen der Photovoltaikanlage ist dabei rein beispielhaft und nicht einschränkend. Die Erfindung ist für Photovoltaikanlagen mit einer beliebigen Anzahl von Zweigen einsetzbar.

Der Photovoltaikgenerator 10 weist eine Vielzahl von Photovoltaikmodulen 11 auf, von denen jeweils mehrere zu einem Teilgenerator zusammen geschaltet sein können. Dazu sind mehrere Photovoltaikmodule 11 beispielsweise zu Strings reihenverschaltet. Einer oder mehrere Strings können, ggf. parallel geschaltet, den Teilgenerator bilden. In jedem Teilgenerator ist jeweils eine derart große Anzahl von Photovoltaikmodule 11 reihenverschaltet, dass eine Durchlassspannung der reihenverschalteten Photovoltaikmodule 11 größer ist als eine sich aufgrund eventueller Rückströme von der Netzanbindung 40 über die Mittelspannungskomponenten 30 und die Wechselrichteranordnung 20 einstellende Spannung.

Symbolisch ist in der Figur nur ein Photovoltaikmodul 11 je Teilgenerator dargestellt. Jedem Teilgenerator ist ein Gleichstrom (DC - Direct Current) -Sicherungsorgan 12 zugeordnet, zum Beispiel eine sogenannte Strangsicherung. Als Sicherungsorgan 12 kann beispielsweise eine träge Schmelzsicherung eingesetzt werden, die sowohl bei Überstrom als auch im Kurzschlussfall trennt.

Alle Teilgeneratoren eines Zweiges a, b oder c sind parallel an einem Ausgang 13a, b, c des Zweiges zusammengeschaltet. In Figur 1 sind beispielhaft drei Teilgeneratoren je Zweig dargestellt. Auch diese Anzahl ist nicht einschränkend. Wie das Auslassungszeichen in der Figur andeutet, ist üblicherweise eine weit größere Anzahl an Teilgeneratoren pro Zweig vorgesehen. Auch die genannte Verschaltung der einzelnen Photovoltaikmodule 11 zu Strings sowie deren Parallelschaltung zu Teilgeneratoren ist lediglich beispielhaft. Andere Kombinationen aus Serien-und/oder Parallelschaltungen der Photovoltaikmodule 11, durch die die erzeugte Leistung der Photovoltaikmodule 11 an je einem Ausgang 13 pro Zweig zusammengeführt wird, sind ebenfalls denkbar.

Zusätzlich kann vorgesehen sein, dass jedem Teilgenerator oder auch einer Gruppe von zusammengeschalteten Teilgeneratoren ein Schaltorgan, beispielsweise Schütz zugeordnet ist. Das Schaltorgan kann beispielsweise in Gefahrenfällen oder zu Wartungszwecken oder in Fehlerfällen zur Trennung einzelner oder aller Teilgeneratoren von dem entsprechenden Ausgang 13 eingesetzt werden. Es wird angemerkt, dass ein solches Schaltorgan jedoch nicht zur regelmäßigen Trennung des Photovoltaikgenerator vom Wechselrichter, beispielsweise aufgrund von nicht ausreichender Einstrahlung, eingesetzt wird. Es braucht daher auch nicht für eine hohe Anzahl von Schaltzyklen ausgelegt sein.

Innerhalb der Wechselrichteranordnung 20 weist jeder Zweig a, b, c einen Wechselrichter 21 mit einem Gleichstromeingang 22 auf, der mit dem jeweiligen Ausgang 13 a, b, c des Photovoltaikgenerators 10 verbunden ist. Der Eingangsstromkreis eines Wechselrichters wird auch als Gleichspannungszwischenkreis bezeichnet. Dementsprechend wird die am Gleichstromeingang 22 anliegende Spannung auch Zwischenkreisspannung Uz genannt. Typischerweise liegt die Zwischenkreisspannung Uz am optimalen Arbeitspunkt, bei dem der jeweilige Teil des Photovoltaikgenerators 10 unter (aktuellen) Betriebsbedingungen eine maximale elektrische Leistung abgibt, bei etwa 500-1000V. Der Gleichspannungszwischenkreis wird vom Wechselrichter 21 gepulst belastet. Zur Glättung der Zwischenkreisspannung Uz und Einhaltung des optimalen Arbeitspunktes ist ein Zwischenkreiskondensator 23 vorhanden, der eine Zwischenkreiskapazität bereitstellt. In Figur 1 ist der Zwischenkreiskondensator 23 separat dargestellt, häufig ist er jedoch in den Wechselrichter integriert.

Weiterhin sind innerhalb der Wechselrichteranordnung 20 noch in jedem der Zweige ein Hilfstransformator 25, Hilfskomponenten 26, eine Pufferbatterie 27 sowie eine Vorladeeinrichtung 28 vorhanden. Der Hilfstransformator 25 dient der Stromversorgung der Hilfskomponenten 26. Typischerweise werden die Hilfskomponenten mit Gleichstrom versorgt. Eine entsprechende Gleichrichter- und Regelschaltung ist aus Gründen der Vereinfachung nicht dargestellt. Beispielhaft ist in der Figur ein Lüfter als Hilfskomponente 26 eingezeichnet. Weitere Hilfskomponenten sind Überwachungseinrichtungen und Einrichtungen zur Steuerung des jeweiligen Wechselrichters 21 sowie zur Datenerfassung und Datenfernübertragung. Weiterhin wird die vom Hilfstransformator 25 heruntertransformierte Spannung zum Aufladen oder zur Ladungserhaltung der Pufferbatterie 27 eingesetzt. Diese Funktion der Pufferbatterie 27 und der Vorladeeinrichtung 28 werden weiter unten näher erläutert.

Jeder der Wechselrichter 21 hat einen Wechselstromausgang 24, der mit üblicherweise drei Phasen unmittelbar mit einer Primärseite eines Mittelspannungstransformators 31 zur Einspeisung in ein Mittelspannungsnetz 41 verbunden ist. Unmittelbar bedeutet dabei insbesondere, dass zwischen dem Wechselrichter 21 und dem Mittelspannungstransformator 31 kein Schaltorgan vorgesehen ist, das angesteuert werden oder automatisch schließen kann. Eine Verbindung unter Zwischenschaltung einer Sicherung, eines Trenners oder eines anderen Schutzorgans, das automatisch trennen, aber nicht wieder einschalten kann, soll im Rahmen der Anmeldung dagegen von dem Begriff unmittelbar umfasst sein. Bei einer anmeldungsgemäßen Photovoltaikanlage steht also auf der Primärseite (d.h. der Niederspannungsseite) zwischen Wechselrichter und Mittelspannungstransformator kein Schaltorgan bereit, das zum regelmäßigen und nicht manuellen Trennen des Mittelspannungstransformators von und Wiederverbinden des Mittelspannungstransformators mit dem Wechselrichter geeignet ist. Ein Trenn-, Schutz- oder Sicherungsorgan, das fehlerbedingt öffnet oder manuell, z.B. zu Wartungszwecken, geöffnet werden kann und manuell wieder geschlossen werden kann, kann dagegen vorhanden sein.

Es wird davon ausgegangen, dass die Wechselrichter 21 Wechselrichterbrücken mit Transistoren, z. B. mit IGBTs oder MOSFETs, aufweisen, die mit antiparallelen Freilaufdioden vor zu hohen Sperrspannungen geschützt sind. Diese Freilaufdioden bilden einen Vollwellengleichrichter für an den Wechselstromausgängen 24 anliegende Wechselspannung. Die Wechselrichter 21 sind zudem selbstkommutierend, die Kommutierung erfolgt durch Aus- und Einschalten der als Schalter eingesetzten Transistoren.

Für jeden Wechselrichter 21a, b, c ist im gezeigten Beispiel genau ein Mittelspannungstransformator 31a, b, c vorgesehen. Es ist jedoch auch denkbar, zwei oder mehr Wechselrichter auf einen Mittelspannungstransformator zu führen, der ggf. mit mehreren Primärwicklungen ausgestattet ist.

Bevorzugt liegt die Leistung des Mittelspannungstransformators 31 im Bereich von 1 bis 1,5 Megavoltampere (MVA). Dieses korrespondiert mit Strömen im Zwischenstromkreis, die sich bei der oben genannten Zwischenstromkreisspannung von 500-1000V noch mit tragbaren Leitungsquerschnitten ohne zu große ohmsche Verluste übertragen lassen. Gleichzeitig ermöglicht der genannte Leistungsbereich den Aufbau einer Freiluftanlage ohne dass die Anzahl von parallelen Zweigen mit jeweils eigenem Wechselrichter 21 und Mittelspannungstransformator 31 zu groß und damit der Aufbau unökonomisch wird.

Jedem Mittelspannungstransformator 31 sind ein Sicherungsorgan 32 und ein Lasttrennschalter 33 zugeordnet, die in Reihe mit der jeweiligen Sekundärwicklung der Mittelspannungstransformatoren 31 geschaltet sind.

Als Sicherungsorgan 32 kann beispielsweise eine träge Schmelzsicherung eingesetzt werden, die sowohl bei Überstrom als auch im Kurzschlussfall trennt. Wenn jedem Mittelspannungstransformator genau ein Wechselrichter zugeordnet ist - wie im dargestellten Beispiel - schützt das Sicherungsorgan 32 sowohl den Mittelspannungstransformator als auch den Wechselrichter vor Überstrom.

Als Lasttrennschalter 33 wird bevorzugt ein Federspeichertrenner mit manuellem Aufzug und elektromagnetischer Auslösung eingesetzt. Der Auslösemechanismus ist dabei mit einer Fehlerüberwachungseinrichtung des jeweiligen Wechselrichters 21 verbunden, so dass der Lasttrenner 33 im Fehlerfall automatisch den entsprechenden Zweig selektiv vom Mittelspannungsnetz 41 trennt. Bei Bedarf kann z. B. für Wartungsarbeiten natürlich auch manuell getrennt werden. Ein Federspeichertrenner mit manuellem Aufzug ist hier ausreichend und aus Kostengründen gegenüber einem motorischen Aufzug bevorzugt, insbesondere da der Lasttrennschalter 33 im normalen Betrieb der Photovoltaikanlage nicht betätigt wird, wie weiter unten genauer ausgeführt ist.

Zur Einspeisung der erzeugten elektrischen Leistung in das Mittelspannungsnetz 41 sind die durch die Sicherungsorgane 32 und die Lasttrennschalter 33 einzeln abgesicherten Sekundärstromkreise gemeinsam über ein Koppelschütz 42 mit dem Mittelspannungsnetz 41 verbunden. Das Koppelschütz 42 wird von einer Überwachungseinrichtung 43 angesteuert, die überprüft, ob für das Mittelspannungsnetz 41 vorgeschriebene Toleranzgrenzen für Parameter wie Spannungsamplitude, Phasenlage, Blindleistung, Frequenz usw. eingehalten werden. Wenn einer dieser Parameter den vorgeschriebenen Toleranzbereich verlässt, wird die Photovoltaikanlage durch das Koppelschütz 42 vom Mittelspannungsnetz 41 getrennt.

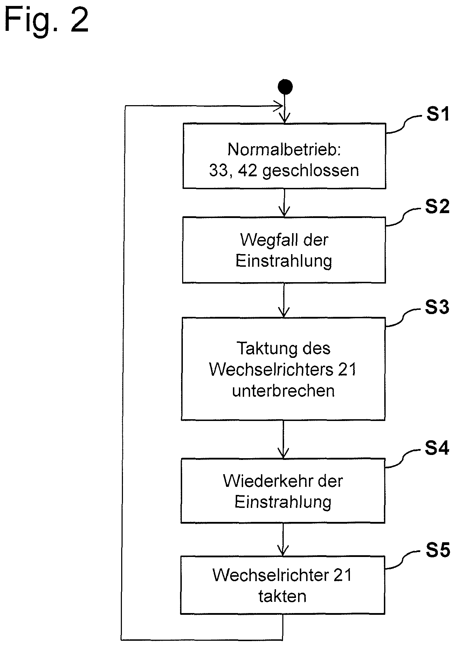

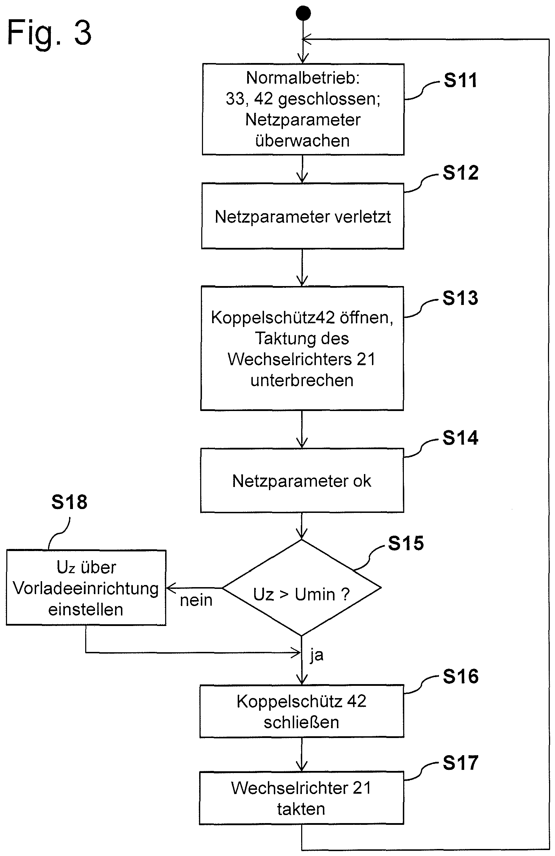

Im Folgenden werden Verfahren zum Betreiben einer Photovoltaikanlage anhand von Flussdiagrammen in den Figuren 2 und 3 beschrieben. Die Verfahren können zum Beispiel im Zusammenhang mit einer Photovoltaikanlage gemäß dem in Figur 1 dargestellten Ausführungsbeispiel durchgeführt werden. Benutze Bezugszeichen beziehen sich auf Figur 1.

Zunächst wird die Photovoltaikanlage in einem Schritt S1 (Fig. 2) in einem Normalbetrieb betrieben. Dabei erzeugen die Photovoltaikmodule 11 im Bereich des Photovoltaikgenerators 10 durch ausreichende Sonneneinstrahlung genügend elektrische Energie zur Einspeisung in das Mittelspannungsnetz 41.

Im Normalbetrieb werden die Wechselrichter 21 getaktet, um elektrische Leistung von Gleich- in Wechselstrom umzusetzen. Der Zwischenkreis wird bei einer optimalen Arbeitspunktspannung betrieben. Üblicherweise sind im jeweiligen Wechselrichter 21 Mittel zum Einstellen und Nachführen des optimalen Arbeitspunkts vorgesehen (MPP Tracking - Maximum Power Point Tracking). Entsprechend der Spannung Uz im Zwischenkreis ist der Zwischenkreiskondensator 23 aufgeladen. Weiterhin sind sowohl die Lasttrennschalter 33 der einzelnen Zweige a, b, c der Photovoltaikanlage geschlossen als auch das gemeinsame Koppelschütz 42, so dass alle Wechselrichter 21 über die entsprechenden Mittelspannungstransformatoren 31 in das Mittelspannungsnetz 41 einspeisen.

Am Wechselstromausgang 24 eines jeden Wechselrichters 21 wird vom Hilfstransformator 25 Leistung entnommen, die zur Versorgung der Hilfskomponenten 26 benutzt wird. Die vom Hilfstransformator 25 bereitgestellte Spannung wird zudem zum Aufladen oder zur Ladungserhaltung der Pufferbatterie 27 eingesetzt. Die Vorladeeinrichtung 28 ist im Normalbetrieb nicht aktiv.

Wenn die von den Photovoltaikmodulen 11 erzeugte elektrische Leistung z.B. nachts oder bei vollständiger Verschattung nicht mehr für eine Einspeisung in das Mittelspannungsnetz 41 ausreicht (Schritt S2), bleiben in einem folgenden Schritt S3 die Photovoltaikmodule 11 der verschiedenen Zweige a, b, c mit den jeweiligen Wechselrichtern 21 verbunden. Die Lasttrennschalter 33 und das Koppelschütz 42 bleiben geschlossen, so dass alle Wechselrichter 21 mit ihrem jeweiligen Wechselstromausgang 24 indirekt über die Mittelspannungstransformatoren 31 an das Mittelspannungsnetz 41 angekoppelt sind. Die Wechselrichter 21 werden dabei nicht getaktet.

Über den Hilfstransformator 25 werden in dem Fall die Hilfskomponenten 26 vom Mittelspannungsnetz 41 mit Energie versorgt. Bedingt durch die Zwischenkreiskapazität des Zwischenkreiskondensators 23 wird die Zwischenkreispannung Uz zunächst aufrechtgehalten. Da die Arbeitsspannung im Zwischenkreis regelmäßig größer als die Scheitelspannung der am Wechselstromausgang 24 des Wechselrichters 21 anliegenden Wechselspannung ist, sinkt die Zwischenkreispannung Uz mit einer Zeitkonstante im Bereich von Minuten auf diesen Scheitelwert der Wechselspannung. Wie zuvor im Zusammenhang mit Fig. 1 ausgeführt ist, ist die Anzahl von reihenverschalteten Photovoltaikmodulen 11 innerhalb eines jeden Teilgenerators so gewählt, dass die Durchlassspannung der reihenverschalteten Photovoltaikmodule 11 größer ist als dieser Scheitelwert der Wechselspannung. Obwohl weder wechsel- noch gleichstromseitig eine Trennung erfolgt, werden die Photovoltaikmodule 11 nicht beschädigt.

Wenn nach Wiedereinsetzen der Einstrahlung (Schritt S4) von den Photovoltaikmodulen 11 wieder Leistung bereitgestellt wird, beginnen die Wechselrichter 21 in einem Schritt S5 zu takten und stellen in den jeweiligen Gleichspannungszwischenkreisen einen gewünschten Gleichspannungs-Sollwert ein. Damit befindet sich die Photovoltaikanlage wieder im Normalbetrieb.

Eine Weiterbildung des Verfahrens zum Betreiben einer Photovoltaikanlage ist in Fig. 3 dargestellt. Während des Normalbetriebs wird in einem Schritt S11 von der Überwachungseinrichtung 43 überwacht, ob relevante Netzparameter am Punkt der Einspeisung des erzeugten Stroms in das Mittelspannungsnetz 41 den Vorgaben der Netzbetreiber, beispielsweise bezüglich der Spannung, der Frequenz oder der eingespeisten Blindleistung, entsprechen.

Verlässt einer oder mehrere dieser Parameter in einem Schritt S12 den vorgeschriebenen Toleranzbereich, öffnet die Überwachungseinrichtung 43 in einem Schritt S13 das Koppelschütz 42. Bei geöffnetem Koppelschütz 42 steigt die Zwischenkreisspannung in Richtung der Leerlaufspannung der Photovoltaikmodule 11 an. Es ist dann sicherzustellen, dass Wechselrichter zumindest zeitweise mit einer derartig hohen Spannung wie der Leerlaufspannung der Photovoltaikmodule 11 beaufschlagt werden kann.

Wenn von der Überwachungseinrichtung 43 feststellt wird, dass die Netzeinspeiseparameter wieder im Toleranzbereich liegen (Schritt S14), wird in einem Schritt S15 zunächst überprüft, ob die Zwischenkreisspannungen Uz jeweils über einer vorgegebenen Mindestspannung Umin liegen. Die Mindestspannung Umin kann beispielsweise im Bereich von 30% bis 70% der Zwischenkreisspannung im Betrieb liegen. Wenn die Unterbrechungszeit, in der das Koppelschütz 42 geöffnet war, kurz war, beispielsweise kürzer als eine Minute, haben sich bedingt durch die Kapazität der Zwischenkreiskondensatoren 23 die Zwischenkreisspannungen noch nicht unter die Mindestspannung Umin abgesenkt.

Falls in dem Schritt S15 festgestellt wurde, dass die jeweilige Zwischenkreisspannung Uz über der Mindestspannung Umin liegt und die Unterbrechungszeit folglich nicht zu lang war, wird das Koppelschütz 42 in einem Schritt S16 wieder eingeschaltet, ohne dass eine Gefahr von hohen Rückströmen über die Mittelspannungstransformatoren 31 und die Wechselrichter 21 in die Zwischenkreiskondensatoren 23 besteht. Nach Wiedereinschalten des Koppelschützes 42 werden in einem folgenden Schritt S17 die Wechselrichter 21 wieder getaktet, um die Zwischenkreisspannung auf den gewünschten Sollwert zu bringen.

Falls die Öffnungszeit des Koppelschützes 42 jedoch zu lange angedauert hat und die Spannung Uz in den Gleichspannungszwischenkreisen unter die Mindestspannung Umin abgesunken ist, könnten Überströme bei einem unmittelbaren Wiedereinschalten des Koppelschützes 42 nicht ausgeschlossen werden. In diesem Fall werden in einem Schritt S18 die Zwischenkreiskondensatoren 23 zunächst über die entsprechenden Vorladeeinrichtungen 28 aus der jeweiligen Pufferbatterie 27 auf einen vorgegebenen Sollwert, der größer oder gleich der Mindestspannung Umin ist, vorgeladen. Erst danach wird das Verfahren mit den Schritten S16 und S17 fortgesetzt, in denen, wie zuvor beschrieben, das Koppelschütz 42 geschlossen wird und die Wechselrichter 21 wieder takten. Die Vorladeeinrichtung kann zum Beispiel mit einem Hochsetzsteller realisiert werden. Zudem kann in der Vorladeeinrichtung eine galvanische Trennung zwischen dem Gleichspannungszwischenkreis und der Pufferbatterie 27 vorgesehen sein.

Alternativ zu dem in Figur 1 gezeigten Aufbau kann eine Vorladung der Zwischenkreise auch aus einer zentralen Pufferbatterie erfolgen. Auch die Versorgung der Hilfskomponenten 26 erfolgt dann entsprechend aus der zentralen Pufferbatterie. Zur Minimierung von ohmschen Verlusten in der Stromverteilung bei einer solchen zentralen Pufferbatterie kann diese eine relativ hohe Spannung von beispielsweise 110 V haben. Für die lokalen Pufferbatterien 27 sind dagegen niedrigere Spannungen bevorzugt, beispielsweise 24 V. Gegebenenfalls kann auch eine zentrale Vorladeeinrichtung vorgesehen sein, die nach Bedarf auf die entsprechenden Zwischenkreise aufgeschaltet werden kann.

Für Wartungsarbeiten oder bei einem notwendigen Austausch eines der Wechselrichter 21 oder eines der Mittelspannungstransformatoren 31 wird der entsprechende Zweig der Photovoltaikanlage über den zugeordneten Lasttrennschalter 33 abgekoppelt. Wie zuvor beschrieben, kann bei einem elektromagnetisch ausgelösten Lasttrennschalter 33 diese Abkoppelung auch durch eine Fehlerüberwachungseinrichtung des jeweiligen Wechselrichters 21 erfolgen. Da die Ereignisse, die zur Betätigung der Lasttrennschalter 33 führen, ihrer Natur nach selten sein sollten, kann als Lasttrennschalter 33 ein Federspeichertrenner mit manuellem Aufzug eingesetzt werden.

Das Wiederanfahren eines derart über den Lasttrennschalter 33 abgekoppelten Zweigs der Photovoltaikanlage erfolgt analog zu der Wiederanbindung der Photovoltaikanlage über das Koppelschütz 42 wie zuvor beschrieben. Dementsprechend wird also vor dem Wiedereinschalten eines getrennten Lasttrennschalters 33 der Zwischenkreiskondensator 23 über die Vorladeeinrichtung 28 aufgeladen.

Da das Auftreten nicht zugelassener Netzeinspeiseparameter kein seltenes Ereignis ist, ist das Koppelschütz 42 somit bevorzugt für häufige und besonders bevorzugt zur fehlerfreien Ausführung von vielen, besonders bevorzugt von mehr als 20 000 Schaltzyklen ausgelegt. Das Koppelschütz 42 kann selbstverständlich zusätzlich zu anderen als den oben beschriebenen Zwecken eingesetzt werden, beispielsweise zur vollständigen Trennung der Photovoltaikanlage vom Netz zu Wartungszwecken. Das anmeldungsgemäße Koppelschütz 42 unterscheidet sich von bekannten Anlagentrennern abgesehen von seinem Einsatzzweck im Rahmen der erfindungsgemäßen Verfahren durch seine Fähigkeit, regelmäßig geschaltet zu werden.

### Bezugszeichenliste

- 10: Photovoltaikgenerator
- 11: Photovoltaikmodul
- 12: Gleichstrom-Sicherungsorgan
- 20: Wechselrichteranordnung
- 21: Wechselrichter
- 22: Gleichstromeingang
- 23: Zwischenkreiskondensator
- 24: Wechselstromausgang
- 25: Hilfstransformator
- 26: Hilfskomponenten
- 27: Pufferbatterie
- 28: Vorladeeinrichtung
- 30: Mittelspannungskomponenten
- 31: Mittelspannungstransformator
- 32: Sicherungsorgan
- 33: Lasttrennschalter
- 40: Netzanbindungskomponenten
- 41: Mittelspannungsnetz
- 42: Koppelschütz
- 43: Überwachungseinrichtung

## Patentansprüche

1. Verfahren zum Betreiben einer Photovoltaikanlage zur Einspeisung in ein Mittelspannungsnetz (41), wobei die Photovoltaikanlage einen Photovoltaikgenerator (10) mit einer reihenverschalteten Mehrzahl von Photovoltaikmodulen (11), mindestens einen Wechselrichter (21) und mindestens einen Mittelspannungstransformator (31) aufweist, und wobei
- der Mittelspannungstransformator (31) primärseitig unmittelbar mit einem Wechselstrom-Niederspannungsausgang (24) des Wechselrichters (21) verbunden ist,
- der Wechselrichter (21) über einen Gleichstromeingang (22) mit dem Photovoltaikgenerator (10) verbunden ist und
- der Wechselrichter (21) bauartbedingt Rückströme von dem Wechselstrom-Niederspannungsausgang (24) zu dem Gleichstromeingang (22) zulässt,
**dadurch gekennzeichnet, dass**
bei nicht zur Einspeisung ausreichender Erzeugung von elektrischer Leistung durch die Photovoltaikmodule (11)
- der Wechselrichter (21) wechselstromseitig über den Mittelspannungstransformator (31) mit dem Mittelspannungsnetz (41) verbunden bleibt und
- der Wechselrichter (21) gleichstromseitig mit dem Photovoltaikgenerator (10) verbunden bleibt,
wobei eine Durchlassspannung der reihenverschalteten Mehrzahl der Photovoltaikmodule (11) größer ist, als eine sich am Gleichstromeingang (22) aufgrund der Rückströme einstellende Spannung.

2. Verfahren gemäß Anspruch 1, bei dem die Photovoltaikanlage sekundärseitig des Mittelspannungstransformators (31) mit Hilfe eines zwischen dem Mittelspannungstransformator (31) und dem Mittelspannungsnetz (41) angeordneten Koppelschützes (42),von dem Mittelspannungsnetz (41) getrennt wird, wenn vorgegeben Anforderungen an Netzeinspeiseparameter nicht erfüllt sind.

3. Verfahren gemäß Anspruch 2, bei dem die Netzeinspeiseparameter eine Spannungsamplitude und/oder eine Frequenz des Mittelspannungsnetzes (41) und/oder eine eingespeiste Blindleistung betreffen.

4. Photovoltaikanlage mit einem Photovoltaikgenerator (10) mit einer Mehrzahl von Photovoltaikmodulen (11), mindestens einem Wechselrichter (21) und mindestens einem Mittelspannungstransformator (31), wobei
- der Mittelspannungstransformator (31) primärseitig unmittelbar mit einem Wechselstrom-Niederspannungsausgang (24) des Wechselrichters (21) verbunden ist,
- der Wechselrichter (21) über einen Gleichstromeingang (22) mit dem Photovoltaikgenerator (10) verbunden ist und
- der Wechselrichter (21) bauartbedingt Rückströme von dem Wechselstrom-Niederspannungsausgang (24) zu dem Gleichstromeingang (22) zulässt,
**dadurch gekennzeichnet, dass**
innerhalb des Photovoltaikgenerators (10) eine derart große Anzahl von Photovoltaikmodule (11) reihenverschaltet ist, dass eine Durchlassspannung der reihenverschalteten Photovoltaikmodule (11) größer ist, als eine sich am Gleichstromeingang (22) aufgrund der Rückströme einstellende Spannung, und dass die Photovoltaikanlage zur Durchführung eines Verfahrens gemäß einem der Ansprüche 1 bis 3 eingerichtet ist.

5. Photovoltaikanlage gemäß Anspruch 4, bei der kein Schaltorgan, insbesondere kein Schaltorgan, das angesteuert oder automatisch schließen kann, in der Verbindung zwischen dem Mittelspannungstransformator (31) und dem Wechselstrom-Niederspannungsausgang (24) des Wechselrichters (21) vorhanden ist.

6. Photovoltaikanlage gemäß Anspruch 4 oder 5, bei der kein Schaltorgan, insbesondere kein Schaltorgan, das angesteuert oder automatisch öffnen und schließen kann, in der Verbindung zwischen dem Photovoltaikgenerators (10) und dem Gleichstromeingang (22) des Wechselrichters (21) vorhanden ist.

7. Photovoltaikanlage gemäß einem der Ansprüche 4 bis 6, bei der Wechselrichterbrücken der Wechselrichter (21) Schalttransistoren, insbesondere IGBTs oder MOSFETs aufweisen.

8. Photovoltaikanlage gemäß Anspruch 7, bei der die Wechselrichterbrücken der Wechselrichter (21) Freilaufdioden aufweisen, die antiparallel zu den Schalttransistoren der Wechselrichterbrücken angeordnet sind.

9. Photovoltaikanlage gemäß Anspruch 4 bis 8, bei der in der Verbindung zwischen dem Mittelspannungstransformator (31) und dem Mittelspannungsnetz (41) ein Koppelschütz (42) angeordnet ist.

10. Photovoltaikanlage gemäß Anspruch 9, bei der mindestens zwei Mittelspannungstransformatoren (31) vorgesehen sind, die sekundärseitig in Energieflussrichtung bei Einspeisung vor dem Koppelschütz (42) miteinander verbunden sind, so dass das Koppelschütz (42) bei einem Schaltvorgang die mindestens zwei Mittelspannungstransformatoren (31) gemeinsam vom Mittelspannungsnetz (41) trennt bzw. mit diesem verbindet.

11. Photovoltaikanlage gemäß einem der Ansprüche 4 bis 10, bei der eine Überwachungseinrichtung (43) zur Überprüfung von Netzeinspeiseparametern des von der Photovoltaikanlage erzeugten Stroms vorgesehen ist, die mit dem Koppelschütz (42) verbunden ist und mit diesem zusammenwirkt.

12. Photovoltaikanlage gemäß einem der Ansprüche 4 bis 11, bei der für jeden Mittelspannungstransformator (31) sekundärseitig ein Sicherungsorgan (32) vorgesehen ist.

13. Photovoltaikanlage gemäß einem der Ansprüche 4 bis 12, bei der für jeden Mittelspannungstransformator (31) sekundärseitig ein Lasttrennschalter (33), insbesondere ein Federspeichertrenner, bevorzugt ein Federspeichertrenner mit manuellem Aufzug, vorgesehen ist.

14. Photovoltaikanlage gemäß einem der Ansprüche 4 bis 13, bei der der mindestens eine Wechselrichter (21) für Leistungen größer als 100 kW und bevorzugt größer als 300 kW ausgelegt ist.

15. Photovoltaikanlage gemäß einem der Ansprüche 4 bis 14, bei der eine Vorladeeinrichtung (28) zur Beaufschlagung eines Gleichspannungszwischenkreises an einem Gleichstromeingang (22) des Wechselrichters (31) mit einer vorgegebenen Spannung vorgesehen ist.

16. Photovoltaikanlage gemäß Anspruch 15, bei der eine Pufferbatterie (27) zur Versorgung der Vorladeeinrichtung (28) während einer Trennung der Photovoltaikanlage von dem Mittelspannungsnetz (41) vorgesehen ist.

## Claims

1. Method for operating a photovoltaic system for feeding into a medium-voltage grid (41), wherein the photovoltaic system comprises a photovoltaic generator (10) comprising a plurality of photovoltaic modules (11), at least one inverter (21) and at least one medium-voltage transformer (31), and wherein
- the medium-voltage transformer (31) is connected on the primary side directly to a low-voltage AC output (24) of the inverter (21),
- the inverter (21) is connected to the photovoltaic generator (10) via a DC input (22), and
- the inverter (21), due to its design, permits reverse currents from the low-voltage AC output (24) to the DC input (22),
**characterized in that**
in the event that the generation of electric power by the photovoltaic modules (11) is insufficient for the feed-in,
- the inverter (21) remains connected on the AC side to the medium-voltage grid (41) via the medium-voltage transformer 31, and
- the inverter (21) remains connected on the DC side to the photovoltaic generator (10),
wherein a forward voltage of the series-connected photovoltaic modules (11) is greater than a voltage set at the DC input (22) owing to the reverse currents.

2. Method according to Claim 1, in which the photovoltaic system is isolated on the secondary side of the medium-voltage transformer (31) from the medium-voltage grid (41) with the aid of a coupling contactor (42), which is arranged between the medium-voltage transformer (31) and the medium-voltage grid (41), when preset requirements for grid feed parameters are not met.

3. Method according to Claim 2, in which the grid feed parameters relate to a voltage amplitude and/or a frequency of the medium-voltage grid (41) and/or a fed-in reactive power.

4. Photovoltaic system comprising a photovoltaic generator (10) comprising a plurality of photovoltaic modules (11), at least one inverter (21) and at least one medium-voltage transformer (31), wherein
- the medium-voltage transformer (31) is connected on the primary side directly to a low-voltage AC output (24) of the inverter (21),
- the inverter (21) is connected to the photovoltaic generator (10) via a DC input (22), and
- the inverter (21), due to its design, permits reverse currents from the low-voltage AC output (24) to the DC input (22),
**characterized in that**
such a large number of photovoltaic modules (11) is connected in series within the photovoltaic generator (10) that a forward voltage of the series-connected photovoltaic modules (11) is greater than a voltage set at the DC input (22) owing to the reverse currents, and **in that** the photovoltaic system is configured for running a method according to one of Claims 1 to 3.

5. Photovoltaic system according to Claim 4, in which no switching element, in particular no switching element which can close by actuation or automatically, is provided in the connection between the medium-voltage transformer (31) and the low-voltage AC output (24) of the inverter (21).

6. Photovoltaic system according to Claim 4 or 5, in which no switching element, in particular no switching element which can open and close by actuation or automatically, is provided in the connection between the photovoltaic generator (10) and the DC input (22) of the inverter (21).

7. Photovoltaic system according to one of Claims 4 to 6, in which inverter bridges of the inverters (21) comprise switching transistors, in particular IGBTs or MOSFETs.

8. Photovoltaic system according to Claim 7, in which the inverter bridges of the inverters (21) have freewheeling diodes, which are arranged back-to-back in parallel with respect to the switching resistors of the inverter bridges.

9. Photovoltaic system according to Claims 4 to 8, in which a coupling contactor (42) is arranged in the connection between the medium-voltage transformer (31) and the medium-voltage grid (41).

10. Photovoltaic system according to Claim 9, in which at least two medium-voltage transformers (31) are provided, which are connected to one another on a secondary side upstream of the coupling contactor (42) in the direction of energy flow during feeding, with the result that the coupling contactor (42), in the event of a switching operation, disconnects the at least two medium-voltage transformers (31) jointly from the medium-voltage grid (41) or connects said transformers thereto.

11. Photovoltaic system according to one of Claims 4 to 10, in which a monitoring device (43) for checking grid feed parameters of the current generated by the photovoltaic system is provided, said monitoring device being connected to the coupling contactor (42) and interacting therewith.

12. Photovoltaic system according to one of Claims 4 to 11, in which a fuse element (32) is provided on a secondary side for each medium-voltage transformer (31).

13. Photovoltaic system according to one of Claims 4 to 12, in which a load break switch (33), preferably a spring-operated disconnector with manual windup is provided on the secondary side for each medium-voltage transformer (31).

14. Photovoltaic system according to one of Claims 4 to 13, in which the at least one inverter 21 is designed for powers of greater than 100 kW and preferably greater than 300 kW.

15. Photovoltaic system according to one of Claims 4 to 14, in which a precharging device (28) for applying a preset voltage to a DC link at a DC input (22) of the inverter (31) is provided.

16. Photovoltaic system according to Claim 16, in which a buffer battery (27) for supplying power to the precharging device (28) during a disconnection of the photovoltaic system from the medium-voltage grid (41) is provided.

## Revendications

1. Procédé pour faire fonctionner un équipement photovoltaïque servant à l'injection dans un réseau à moyenne tension (41), l'équipement photovoltaïque possédant un générateur photovoltaïque (10) avec une pluralité de modules photovoltaïques (11) branchés en série, au moins un onduleur (21) et au moins un transformateur de tension alternative (31), et
- le transformateur de tension alternative (31) étant relié par son côté primaire directement à une sortie de basse tension alternative (24) de l'onduleur (21),
- l'onduleur (21) étant relié au générateur photovoltaïque (10) par le biais d'une entrée de courant continu (22) et
- l'onduleur (21), du fait de sa construction, autorisant les courants de retour de la sortie de basse tension alternative (24) à l'entrée de courant continu (22),
**caractérisé en ce que**
lorsque la puissance produite par les modules photovoltaïques (11) est insuffisante pour l'injection,
- l'onduleur (21) reste relié, par son côté à courant alternatif, au réseau à moyenne tension (41) par le biais du transformateur de tension alternative (31) et
- l'onduleur (21) reste relié, par son côté à courant continu, au générateur photovoltaïque (10),
une tension directe de la pluralité de modules photovoltaïques (11) branchés en série étant supérieure à une tension qui s'établit à l'entrée de courant continu (22) en raison des courants de retour.

2. Procédé selon la revendication 1, dans lequel l'équipement photovoltaïque, du côté secondaire du transformateur de tension alternative (31), est déconnecté du réseau à moyenne tension (41) à l'aide d'un contacteur de couplage (42) disposé entre le transformateur de tension alternative (31) et le réseau à moyenne tension (41) lorsque des exigences prédéfinies imposées à des paramètres d'injection dans le réseau ne sont pas satisfaites.

3. Procédé selon la revendication 2, dans lequel les paramètres d'injection dans le réseau concernent une amplitude de tension et/ou une fréquence du réseau à moyenne tension (41) et/ou une puissance réactive injectée.

4. Équipement photovoltaïque comprenant un générateur photovoltaïque (10) avec une pluralité de modules photovoltaïques (11), au moins un onduleur (21) et au moins un transformateur de tension alternative (31),
- le transformateur de tension alternative (31) étant relié par son côté primaire directement à une sortie de basse tension alternative (24) de l'onduleur (21),
- l'onduleur (21) étant relié au générateur photovoltaïque (10) par le biais d'une entrée de courant continu (22) et
- l'onduleur (21), du fait de sa construction, autorisant les courants de retour de la sortie de basse tension alternative (24) à l'entrée de courant continu (22),
**caractérisé en ce que**
à l'intérieur du générateur photovoltaïque (10) un nombre suffisamment élevé de modules photovoltaïques (11) sont branchés en série pour qu'une tension directe des modules photovoltaïques (11) branchés en série soit supérieure à une tension qui s'établit à l'entrée de courant continu (22) en raison des courants de retour, et **en ce que** l'équipement photovoltaïque est conçu pour mettre en oeuvre un procédé selon l'une des revendications 1 à 3.

5. Équipement photovoltaïque selon la revendication 4, dans lequel il n'existe aucun organe de commutation, notamment aucun organe de commutation qui peut être commandé ou se fermer automatiquement, dans la liaison entre le transformateur de tension alternative (31) et la sortie de basse tension alternative (24) de l'onduleur (21).

6. Équipement photovoltaïque selon la revendication 4 ou 5, dans lequel il n'existe aucun organe de commutation, notamment aucun organe de commutation qui peut être commandé ou se fermer automatiquement, dans la liaison entre le générateur photovoltaïque (10) et l'entrée de courant continu (22) de l'onduleur (21).

7. Équipement photovoltaïque selon l'une des revendications 4 à 6, dans lequel les ponts d'onduleur de l'onduleur (21) possèdent des transistors de commutation, notamment des IGBT ou des MOSFET.

8. Équipement photovoltaïque selon la revendication 7, dans lequel les ponts d'onduleur de l'onduleur (21) possèdent des diodes de roue libre qui sont montées en tête-bêche avec les transistors de commutation des ponts d'onduleur.

9. Équipement photovoltaïque selon les revendications 4 à 8, dans lequel un contacteur de couplage (42) est disposé dans la liaison entre le transformateur de tension alternative (31) et le réseau à moyenne tension (41).

10. Équipement photovoltaïque selon la revendication 9, dans lequel au moins deux transformateurs de tension alternative (31) sont présents, lesquels sont reliés entre eux du côté secondaire avant le contacteur de couplage (42) dans le sens du flux d'énergie lors de l'injection, de sorte que le contacteur de couplage (42), lors d'une manoeuvre de commutation, déconnecte ensemble les au moins deux transformateurs de tension alternative (31) du réseau à moyenne tension (41) ou les relie ensemble à celui-ci.

11. Équipement photovoltaïque selon l'une des revendications 4 à 10, dans lequel un dispositif de surveillance (43) destiné à contrôler les paramètres d'injection dans le réseau du courant généré par l'équipement photovoltaïque est présent, lequel est relié au contacteur de couplage (42) et coopère avec celui-ci.

12. Équipement photovoltaïque selon l'une des revendications 4 à 11, dans lequel un organe de sécurité (32) est présent du côté secondaire pour chaque transformateur de tension alternative (31).

13. Équipement photovoltaïque selon l'une des revendications 4 à 12, dans lequel un sectionneur de charge (33), notamment un sectionneur à accumulateur à ressort, de préférence un sectionneur à accumulateur à ressort à armement manuel, est présent du côté secondaire pour chaque transformateur de tension alternative (31).

14. Équipement photovoltaïque selon l'une des revendications 4 à 13, dans lequel l'au moins un onduleur (21) est conçu pour des puissances supérieures à 100 kW et de préférence supérieures à 300 kW.

15. Équipement photovoltaïque selon l'une des revendications 4 à 14, dans lequel un dispositif de précharge (28) destiné à alimenter un circuit intermédiaire à tension continue à une entrée de courant continu (22) de l'onduleur (31) avec une tension prédéfinie est présent.

16. Équipement photovoltaïque selon la revendication 15, dans lequel une batterie tampon (27) destinée à alimenter le dispositif de précharge (28) pendant une déconnexion de l'équipement photovoltaïque du réseau à moyenne tension (41) est présente.
